Europäisches Patentamt

European Patent Office

Office européen des brevets

(11) Publication number: **0 421 951 A1**

## (12) EUROPEAN PATENT APPLICATION

(21) Application number: 90830420.7

(22) Date of filing: 25.09.90

(51) Int. Cl.⁵: **B60R 22/44**

(30) Priority: 04.10.89 IT 8498589

(43) Date of publication of application:
**10.04.91 Bulletin 91/15**

(84) Designated Contracting States:
**AT BE CH DE DK ES FR GB GR LI LU NL SE**

(71) Applicant: **Salvaterra, Ettore**
**Via Strada Olmo n. 13**
**I-46100 Mantova(IT)**

(72) Inventor: **Salvaterra, Ettore**
**Via Strada Olmo n. 13**
**I-46100 Mantova(IT)**

(74) Representative: **Lanzoni, Luciano**
**c/o BUGNION S.p.A. Via G. Garibaldi n. 19**
**I-37121 Verona(IT)**

(54) **A device for loosening the tension of a safety-belt around a driver or passenger's body in motor-vehicles.**

(57) The device herein described comprises a support element (2) mounted to a location close to the point where the safety-belt (3) comes out of its casing within which it is coiled; a slide housing (4) inside which the belt (3) can slide which exhibits two walls (5, 6) respectively facing two opposite sides of the strap forming the belt; an electromagnet (7) applied to one of said walls (5); a shutoff member (15) for the safety-belt mounted to the other wall (6) and adapted to lock the belt (3) against the electromagnet (7) as a result of the active operation of the latter, and to release the belt itself when the electromagnet is deactivated, that is when the belt slides inside its housing (4) in an upward direction out of its casing.

FIG.2

EP 0 421 951 A1

# A DEVICE FOR LOOSENING THE TENSION OF A SAFETY-BELT AROUND A DRIVER OR PASSENGER'S BODY IN MOTOR-VEHICLES

The present invention relates to a device for loosening the tension of a safety-belt around a driver or passenger's body in motor-vehicles.

It is known that safety-belts mounted onboard of vehicles, and in particular motor-cars, consist of a strap made of textile material and provided with end attachments engaging the car occupant to the motor-car during the running.

The most-widely used belt in motor-cars is of the three-branched type and it consists of a strap diagonally crossing the occupant's thorax as far as it reaches the belt where it is joined to another strap portion crossing the waist. The strap forming the safety-belt is kept tensioned against the body of the car occupants by an automatic coiler located sideways to the seat.

It is known that during a normal running or when the vehicle is at a standstill the tensioning of the safety-belt against the body is somewhat uncomfortable and some passengers prefer not to fasten the belt, which may be dangerous should an accident occur.

The main object of the present invention is therefore to eliminate the above drawback by providing a device allowing the safety-belt to be loosened around a driver or passenger's body in a motor-vehicle without impairing the safety function performed by said belt.

A further object of the invention is to provide a device which is simple in construction and reliable in operation.

The foregoing and other objects are all attained by the device for loosening the tension of a safety-belt in accordance with the invention the main features of which are set forth in the appended claims.

Further features and advantages of the device in question will become more apparent from the following detailed description of a preferred embodiment thereof, given hereinafter by way of non-limiting example with reference to the accompanying drawings, in which:

- Fig. 1 is a diagrammatic front view of the device of the invention;
- Fig. 2 is a cross-sectional view of the device taken along line II-II in Fig. 1;
- Fig. 3 is a diagrammatic side view of the device.

Referring to the drawings, the device of the invention has been generally identified by reference numeral 1, 2 denotes a support element adapted to be mounted to a location close to the point where the safety-belt, identified by 3, comes out of its casing within which it its wound upon itself. For the sake of simplicity the belt casing which is located beside the car seat has not been shown in the drawings. Anyway it is intended to be disposed at a lower position with respect to the device 1 and therefore the belt 3 moves upwardly with reference to the drawings when it comes out of its casing, whereas it moves downwardly when it is taken up by the automatic coiler which is provided within the casing.

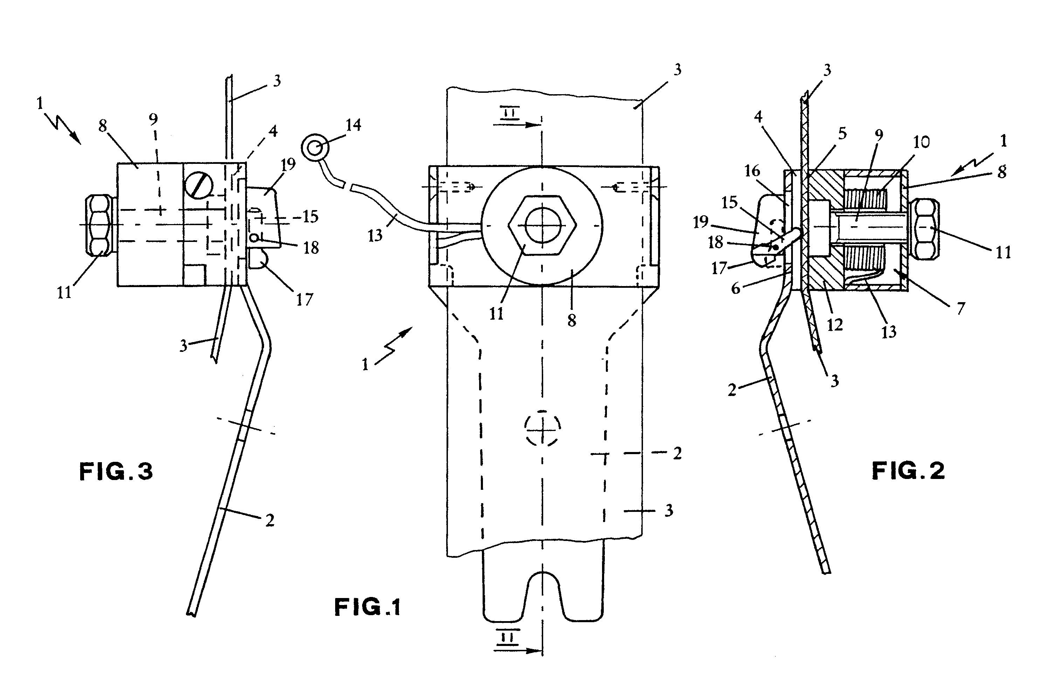

The support element 2 is formed with an elongated and slightly inclined plate, as shown in Figs. 2 and 3, so that when it is fastened, by a screw for example, to the car body or to the belt casing itself, the upper part thereof can take an upright position, as shown in the drawings.

Identified at 4 is a slide housing within which the belt 3 is susceptible of sliding. The housing 4 has a substantially rectangular form seen in section the major sides of which are constituted by a first wall 5 and a second wall 6. Walls 5 and 6 respectively face the two opposite sides of the strap forming the belt 3.

An electromagnet 7 housed within a cylindrical shell 8 is applied to the first wall 5. A flathead screw 9 the top of which is flush with the first wall 5 passes through the electromagnet winding 10 and keeps the different elements in place by means of a locking nut 11. In particular it keeps a plate 12 made of plastic material secured to the cylindrical shell 8, said plate defining the first wall 5 along which the belt 3 slides.

The electromagnet 7 is manually excited, provision being made for an electric connection 13 leading off to a press switch 14 which can be mounted to the dashboard or at all events in a position of easy access by a passenger.

Mounted to use the second wall 6 which in the embodiment shown in the drawing is of one construction with the support element 2, is a shutoff member 15 for the safety-belt 3. The shutoff member 15 is adapted to lock the strap forming the belt 3 against the screw 9 head due to the excitation of the electromagnet 7, and to release the strap itself when the electromagnet 7 is deactivated or when the belt 3 slides within the housing 4 in a direction out of its casing (that is carries out a sliding movement in an upward direction with reference to the drawings).

The shutoff member 15 consists of a movable element, located close to a window 16 formed on the second wall 6, capable of carrying out oscillations between an inclined position (see Fig. 2) in which is occupies the inside of the slide housing 4 and presses the belt 3 against the screw head, and a substantially upright position (see Figs. 2 and 3) in which it frees the housing 4. A counterweight 17 enables the member 15 to take an upright position when the action exerted by the electromagnet 7 ceases.

In greater detail, the movable element forming the shutoff member 15 consists of an iron block substantially in the form of a parallelepiped swinging about a pivot 18 located in the middle of the block and the axis of which is parallel to the lying plane of the strap forming the belt 3 in the slide housing 4.

Pivot 18 is supported by a pair of plate-like elements 19 which are mounted in cantilevered fashion to the second wall 6, at the external side thereof.

Operation of the above described device 1 is as follows.

When the person occupying the car fastens its safety-belts 3, the automatic coiler provided inside the casing located beside the car seat tensions the belt 3 thereby creating a well-known feeling of uncomfortableness.

At this point the car occupant can slightly move forward his body and in this position he can act upon the press switch 14 thereby activating the electromagnet 7. The shutoff member 15 is thus attracted towards the electromagnet 7 and it locks the belt in place inside the housing 4. In this way when the car occupant goes back to the initial position, the belt 3 cannot be taken up by the automatic coiler as it is locked inside the housing 4. Therefore the safety-belt 3 keeps a position which is slightly separated from the driver's or passenger's body and the uncomfortable feeling ceases.

In case of sudden braking or accident or merely when the car occupant moves forward for any reason, the locking action exerted by the shutoff member 15 ceases and the belt 3 can slide in a direction out of its casing. In this case, due to the action of the counterweight 17, the member 15 will take an upright position thereby freeing the housing 4.

It will be recognized that in case of sudden braking or accident the belt behaviour will not change with respect to a conventional safety belt and therefore its safety function is not impaired.

The invention attains the intended purposes.

Obviously in its practical form of embodiment, the invention may also adopt forms that differ from the one illustrated without however departing from the scope of the inventive idea characterizing it. In addition all of the details may be replaced by other technically equivalent elements and the shape, sizes and materials may be of any nature and magnitude according to requirements.

## Claims

1. A device (1) for loosening the tension of a safety-belt (3) around a driver or passenger's body in motor-vehicles, characterized in that it comprises:
- at least a support element (2) adapted to be mounted to a location close to the point where the safety-belt (3) comes out of its casing inside which it is wound upon itself;
- a slide housing (4) fastened to said support element (2) and within which the safety-belt (3) can slide, said housing exhibiting a first and a second wall (5 and 6) respectively facing the opposite sides of the strap forming the safety-belt (3);
- an electromagnet (7) applied to said first wall (5) and manually operable due to the provision of an electric connection (13) leading off to a switch (14);
- a shutoff member (15) for the safety-belt (3) located on said second wall (6) and adapted to lock the strap forming said safety-belt (3) against said electromagnet (7) due to the active operation of the electromagnet, and to release said belt (3) when the electromagnet is deactivated that is at the sliding of said belt within said housing in an upward direction out of its casing.

2. A device according to claim 1, characterized in that said slide housing (4) is of substantially rectangular form in section, the major sides of which are formed with said first (5) and second (6) walls.

3. A device according to claim 1, characterized in that said shutoff member (15) consists of a movable element disposed close to a window (16) formed on said second wall (6) and capable of carrying out swinging movements between an inclined position in which it occupies the inside of said slide housing (4) and presses the belt (3) against said electromagnet (7) and a substantially upright position in which it frees said slide housing (4), provision being made for means adapted to make said movable element (15) take a substantially upright position when the action of said electromagnet (7) ceases.

4. A device according to claim 3, characterized in that said means consists of a counterweight (17) applied to said movable element.

5. A device according to claim 3, characterized in that said movable element (15) consists of an iron block substantially in the form of a parallelepiped and said swinging movements take place about a pivot (18) located in the middle of said parallelepiped, the axis of said pivot (18) being parallel to the lying plane of said belt (3) within said slide housing (4).

6. A device according to claim 5, characterized in that said pivot (18) is supported by a pair of plate-like elements (19) mounted in cantilevered fashion to said second wall (6), at the external side thereof.

7. A device according to claim 1, characterized in that said second wall (6) is of one piece construction with said support element (2).

FIG.2

FIG.1

FIG.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-2 309 250  (ALLIED CHEMICAL CORP.)<br>* Figures 3-5; page 2, line 30 - page 3, line 1; page 4, lines 8-23; claims *<br>— — — | 1-3,5,6 | B 60<br>R 22/44 |
| Y | | 4 | |
| Y | GB-A-2 005 130  (OXLEY AND OXLEY)<br>* Figure 2; claims *<br>— — — | 4 | |
| X | FR-A-2 215 846  (AUTOMOBILES PEUGEOT)<br>* Figure 2; page 1, line 29 - page 2, line 6 *<br>— — — | 1 | |
| Y | | 2,7 | |
| Y | US-A-4 067 612  (PER OLOF WEMAN)<br>* Figures 4-6; claims *<br>— — — | 2,7 | |
| A | | 1 | |
| A | DE-U-8 619 325  (METTIG, INGEBORG)<br>* Figures 1,2; page 5, lines 14-35 *<br>— — — | 1 | |
| A | FR-A-2 188 451  (RENAULT)<br>* Claims; figures *<br>— — — — — | 1-3,5 | |

**TECHNICAL FIELDS SEARCHED (Int. Cl.5)**

B 60 R 22

The present search report has been drawn up for all claims

| Place of search | Date of completion of search | Examiner |
|---|---|---|
| The Hague | 07 January 91 | WESTLAND P.G. |